# EUROPÄISCHE PATENTANMELDUNG

(11) **EP 4 412 059 A1**
(43) Veröffentlichungstag der Anmeldung: **07.08.2024**
(21) Anmeldenummer: 23155191.2
(22) Anmeldetag: 06.02.2023
(51) Int. Cl.: H02K 11/33, H02K 9/08, B25D 17/20, H02K 9/06, H02K 1/276

(54) **WERKZEUGMASCHINE MIT EINER VERBESSERTEN KÜHLUNG FÜR DIE ELEKTRONIK**

(71) Anmelder: Hilti Aktiengesellschaft, 9494 Schaan (LI)
(72) Erfinder: Schittl, Josef, 6712 Thueringen (AT); Schoenenberger, Willy, 9476 Weite (CH)
(74) Vertreter: Hilti Aktiengesellschaft Corporate Intellectual Property

(57) **Zusammenfassung**

Die vorliegende Erfindung betrifft eine Werkzeugmaschine mit einer Elektronik und einem Elektromotor, wobei der Elektromotor einen Rotor und einen Stator umfasst, wobei die Elektronik in einem Elektronikraum der Werkzeugmaschine angeordnet ist. Der Elektronikraum liegt fluidisch mit einem den Elektromotor umgebenden Motorraum der Werkzeugmaschine verbunden vor und der Elektromotor weist Strukturelemente zur Durchmischung der Luft in dem Elektronikraum und/oder Motorraum der Werkzeugmaschine auf. Durch diese Durchmischung der Luft in dem Elektronikraum und/oder Motorraum der Werkzeugmaschine kann eine wirksame Kühlung der Elektronik der Werkzeugmaschine und ihrer Komponenten ermöglicht werden. Die Kühlung der Elektronik und ihrer Komponenten kann weiter verbessert werden, wenn der Elektronikraum eine Eintritts- und eine Austrittsöffnung für einen Luftaustausch aufweist, wobei sich zwischen der Eintrittsöffnung und der Austrittsöffnung ein Luftstrom zur zusätzlichen Kühlung der Elektronik und ihrer Komponenten der Werkzeugmaschine ausbilden kann.

## Beschreibung

Die vorliegende Erfindung betrifft eine Werkzeugmaschine mit einer Elektronik und einem Elektromotor, wobei der Elektromotor einen Rotor und einen Stator umfasst, wobei die Elektronik in einem Elektronikraum der Werkzeugmaschine angeordnet ist. Der Elektronikraum liegt fluidisch mit einem den Elektromotor umgebenden Motorraum der Werkzeugmaschine verbunden vor und der Elektromotor weist Strukturelemente zur Durchmischung der Luft in dem Elektronikraum und/oder Motorraum der Werkzeugmaschine auf. Durch diese Durchmischung der Luft in dem Elektronikraum und/oder Motorraum der Werkzeugmaschine kann eine wirksame Kühlung der Elektronik der Werkzeugmaschine und ihrer Komponenten ermöglicht werden. Die Kühlung der Elektronik und ihrer Komponenten kann weiter verbessert werden, wenn der Elektronikraum eine Eintritts- und eine Austrittsöffnung für einen Luftaustausch aufweist, wobei sich zwischen der Eintrittsöffnung und der Austrittsöffnung ein Luftstrom zur zusätzlichen Kühlung der Elektronik und ihrer Komponenten der Werkzeugmaschine ausbilden kann.

### Hintergrund der Erfindung:

Werkzeugmaschinen weisen üblicherweise einen Motor und ein Werkzeug auf, wobei eine Drehbewegung des Motors mittels einer Transmissionsvorrichtung von dem Motor auf das Werkzeug übertragen werden kann. Mit dem Werkzeug der Werkzeugmaschine können Arbeiten, wie Bohren, Meißeln, Schleifen, Schneider oder dergleichen, ausgeführt werden. Um die Werkzeugmaschine und ihre Komponenten zu steuern, umfassen die meisten Werkzeugmaschine eine Elektronik, die sich bei Betrieb der Werkzeugmaschine erwärmt. Insbesondere bei nicht-belüfteten Werkzeugmaschinen kann es zu beträchtlichen Temperaturunterschieden im Bereich der Elektronik der Werkzeugmaschine kommen. Diese beträchtlichen Temperaturunterschiede können nachteiligerweise durch thermisch hoch belastete Komponenten der Elektronik entstehen. Die thermisch hoch belasteten Komponenten der Elektronik erwärmen sich schneller und stärker als andere Komponenten der Elektronik, die thermisch weniger stark belastet sind. Insbesondere, wenn es sich bei der Werkzeugmaschine um eine nicht-belüftete Werkzeugmaschine handelt, können diese Temperaturunterschiede durch stehende Luft innerhalb der Werkzeugmaschine noch verstärkt werden.

Die Aufgabe, die der vorliegenden Erfindung zugrunde liegt, besteht darin, die vorstehend beschriebenen Mängel und Nachteile des Standes der Technik zu überwinden und eine Werkzeugmaschine bereitzustellen, bei der eine verbesserte Kühlung der Elektronik und ihrer Komponenten ermöglicht werden kann.

Die Aufgabe wird gelöst durch den Gegenstand des unabhängigen Anspruchs. Vorteilhafte Ausführungsformen zu dem Gegenstand des unabhängigen Anspruchs finden sich in den abhängigen Ansprüchen.

### Beschreibung der Erfindung:

Erfindungsgemäß ist eine Werkzeugmaschine mit einer Elektronik und einem Elektromotor vorgesehen, wobei der Elektromotor einen Rotor und einen Stator umfasst, wobei die Elektronik in einem Elektronikraum der Werkzeugmaschine angeordnet ist. Der Elektronikraum liegt fluidisch mit einem den Elektromotor umgebenden Motorraum verbunden vor und der Elektromotor weist Strukturelemente zur Durchmischung der Luft in dem Elektronikraum und/oder Motorraum der Werkzeugmaschine auf. Durch die fluidische Verbindung zwischen dem Elektromotor bzw. seiner Umgebung und dem Elektronikraum der Werkzeugmaschine kann eine starke Verwirbelung und Durchmischung der Luft im Elektronikraum der Werkzeugmaschine erreicht werden. Aufgrund dieser Durchmischung kann die Elektronik der Werkzeugmaschine, insbesondere ihre thermisch stark belasteten Komponenten, besonders wirksam gekühlt und etwaige, bestehende Temperaturunterschiede innerhalb des Elektronikraums bzw. seiner Luft besonders effektiv abgebaut werden. Vorteilhafterweise können mit Hilfe der verbesserten Temperaturverteilung innerhalb des Elektronikraums die maximalen Temperaturen der Elektronik und ihrer Komponenten wirksam reduziert werden. Auf diese Weise kann - vorzugsweise ohne eine Erhöhung von Herstellungskosten und ohne die Vorsehung zusätzlicher Bauteile - eine verbesserte Kühlung der Elektronik und ihrer thermisch besonders stark belasteten Bestandteile erreicht werden. Aufgrund der verbesserten Kühlung der Elektronik und ihrer Komponenten kann vorteilhafterweise die Lebenszeit dieser Bauteile der Werkzeugmaschine erheblich verlängert werden.

Die Formulierung "fluidische Verbindung" bedeutet im Sinne der Erfindung bevorzugt, dass ein Luftaustausch zwischen dem Elektromotor bzw. seiner direkten Umgebung und dem Elektronikraum der Werkzeugmaschine stattfinden kann. Die direkte Umgebung des Elektromotors kann vorzugsweise auch als Motorraum der Werkzeugmaschine bezeichnet werden, wobei dieser Motorraum vorzugsweise von einem Motorgehäuse umgeben sein kann. Mit anderen Worten kann Luft von dem Elektromotor bzw. von dem Motorraum der Werkzeugmaschine in Richtung des Elektronikraums fließen und umgekehrt. Die Vorsehung der fluidischen Verbindung zwischen der Umgebung des Elektromotors bzw. zwischen dem Motorraum und dem Elektronikraum ermöglicht vorteilhafterweise die Durchmischung der Luft im Elektronikraum der Werkzeugmaschine, so dass die Elektronik der Werkzeugmaschine auf diese Weise effektiv gekühlt werden kann. Mithin kann mit der Erfindung eine Durchmischung der Luft im Elektronikraum bzw. im Motorraum der Werkzeugmaschine ermöglicht werden, so dass eine verbesserte Temperaturverteilung innerhalb der Elektronik und ihrer Komponenten erreicht werden kann. Die Durchmischung der Luft im Elektronikraum bzw. im Motorraum der Werkzeugmaschine kann vorteilhafterweise durch die Vorsehung von Strukturelementen im Bereich des Elektromotors erreicht werden.

Es ist im Sinne der Erfindung bevorzugt, dass der Elektromotor ganz oder teilweise in dem Elektronikraum der Werkzeugmaschine angeordnet vorliegt. Vorzugsweise ist der Elektromotor unterhalb der Elektronik angeordnet bzw. die Elektronik der Werkzeugmaschine ist oberhalb des Elektromotors vorgesehen. Sowohl die Elektronik der Werkzeugmaschine, als auch der Elektromotor der Werkzeugmaschine sind von Luft umgeben, wobei der gemeinsame Raum, in dem die Luft vorliegt, die die Elektronik und den Elektromotor der Werkzeugmaschine umgibt, im Sinne der Erfindung bevorzugt als "Elektronikraum der Werkzeugmaschine" bezeichnet wird. Es ist im Sinne der Erfindung bevorzugt, dass der Elektronikraum dazu ausgebildet ist, den Elektromotor, die Elektronik und die Luft, die diese beiden Komponenten der Werkzeugmaschine umgibt, aufzunehmen. Die Eigenschaft, dass die Luft, die den Elektromotor der Werkzeugmaschine umgibt, und die Luft, die die Elektronik der Werkzeugmaschine umgibt, nicht getrennt voneinander vorliegen, sondern dass sie vielmehr einen gemeinsamen Raum, vorzugsweise den Elektronikraum der Werkzeugmaschine, bilden, wird im Sinne der Erfindung bevorzugt als fluidische Verbindung zwischen dem Elektromotor und dem Elektronikraum bezeichnet. Es ist im Sinne der Erfindung bevorzugt, die direkte Luft-Umgebung des Elektromotors als Motorraum der Werkzeugmaschine zu bezeichnen, wobei dieser Motorraum vorzugsweise von einem Motorgehäuse umgeben sein kann. Durch die fluidische Verbindung zwischen Elektronikraum und Motorraum kann der Motorraum zumindest teilweise in dem Elektronikraum der Werkzeugmaschine enthalten sein.

Die Elektronik der Werkzeugmaschine ist vorzugsweise dazu eingerichtet, die Werkzeugmaschine und ihre Komponenten zu steuern. Mithin kann die Elektronik eine Steuereinrichtung der Werkzeugmaschine umfassen oder bilden. Die Elektronik der Werkzeugmaschine kann insbesondere eine Leiterplatte umfassen, wobei auf der Leiterplatte elektronische Bauteile vorgesehen sein können. Die elektronischen Bauteile können vorzugsweise auf einer Vorderseite und/ oder auf einer Rückseite der Leiterplatte angeordnet vorliegen. Die Leiterplatte kann im Sinne der Erfindung vorzugsweise auch als printed circuit board (PCB) bezeichnet werden. Ein wesentlicher Vorteil der Erfindung besteht darin, dass mit der Vorsehung der Strukturelemente auf dem Elektromotor und/oder durch die Vorsehung der Öffnung zur Erzeugung eines Kühlluftstroms im Elektronikraum der Werkzeugmaschine eine besonders wirksame Kühlung der Elektronik und ihrer elektronischen Bauteile ermöglicht werden kann.

Es stellt einen wesentlichen Vorteil der Erfindung dar, dass mit der Erfindung eine verbesserte Luftzirkulation innerhalb der Werkzeugmaschine bzw. innerhalb ihres Elektronik- und/oder Motorraums erreicht werden kann, so dass etwaige Temperaturunterschiede im Bereich der thermisch hoch belasteten Komponenten der Elektronik wirksam abgebaut werden können. Bei den thermisch hoch belasteten Komponenten der Elektronik kann es sich beispielsweise um Gleichrichter, Drosseln oder Bipolartransistoren mit isolierter Gate-Elektrode handeln, ohne darauf beschränkt zu sein. Ein Bipolartransistor mit isolierter Gate-Elektrode (insulated-gate bipolar transistor, IGBT) ist ein Halbleiterbauelement, das in der Leistungselektronik verwendet wird, um ein gutes Durchlassverhalten, eine hohe Sperrspannung und eine gute Robustheit, sowie eine nahezu leistungslose Ansteuerung zu erreichen.

Es ist im Sinne der Erfindung bevorzugt, dass der Elektromotor Rotorpakete umfasst, wobei die Strukturelemente auf den Rotorpaketen des Elektromotors angeordnet vorliegen. Die Strukturelemente bewirken vorteilhafterweise eine besonders wirksame Luftzirkulation innerhalb der Werkzeugmaschine bzw. ihres Elektronik- und/oder Motorraums, wobei durch diese Luftzirkulation überraschenderweise eine besonders gute und wirksame Kühlung der Elektronik und ihrer elektronischen Bauteile ermöglicht werden kann. Es ist im Sinne der Erfindung bevorzugt, dass die Strukturelemente in einem Spalt zwischen der Außenseite des Rotors und der Innenseite des Stators angeordnet vorliegen. In diesem Spalte weisen die Strukturelemente eine Ventilationswirkung auf, d.h. die Strukturelemente sind dazu eingerichtet, eine Durchmischung der Luft in dem Spalt zwischen Stator und Rotor bzw. in dem Motorraum zu bewirken. Aufgrund der fluidischen Verbindung zwischen Elektronik- und Motorraum wird dadurch auch die Luft im Elektronikraum durchmischt und verwirbelt, so dass es zu einer Luftzirkulation im Elektronikraum und zu einer Kühlung der Elektronik und ihrer Komponenten kommt.

Es ist im Sinne der Erfindung ganz besonders bevorzugt, dass der Elektromotor genau drei Rotorpakete umfasst, wobei jedes der Rotorpakete je ein Strukturelement aufweist. Selbstverständlich kann der Elektromotor auch nur ein Rotorpaket oder zwei, vier, fünf oder mehr Rotorpakete umfassen. In einer ganz besonders bevorzugten Ausgestaltung der Erfindung kann der Elektromotor pro Rotorpakete ein Strukturelement aufweisen. Wenn der Elektromotor pro Rotorpaket genau ein Strukturelement aufweist, wird im Kontext der Erfindung bevorzugt davon gesprochen, dass der Elektromotor einen Satz von Strukturelementen aufweist. Wenn der Elektromotor drei Rotorpakete aufweist, kann ein solcher Satz von Strukturelementen beispielsweise drei Strukturelemente umfassen. Es kann im Sinne der Erfindung auch bevorzugt sein, dass der Elektromotor mehr als einen Satz von Strukturelementen umfasst. In dieser Ausgestaltung der Erfindung können beispielsweise mehr als ein Strukturelement pro Rotorpaket vorgesehen sein. Wenn mehr als ein Strukturelement pro Rotorpaket vorgesehen ist, können diese mehreren Strukturelemente pro Rotorpaket beispielsweise im Wesentlichen gleichmäßig auf einem Umfang des Rotorpakets verteilt vorliegen. Ein Rotorpaket weist in einer Schnittdarstellung vorzugsweise eine im Wesentlichen kreisförmige Form auf, wobei beispielsweise zwei Strukturelemente in einem Winkelabstand von 180 Grad, also auf gegenüberliegenden Seiten des Rotorpakets, angeordnet vorliegen können. Wenn beispielsweise drei Strukturelemente pro Rotorpaket vorgesehen sind, können diese drei Strukturelemente beispielsweise in einem Winkelabstand von 120 Grad angeordnet vorliegen. Wenn beispielsweise n Strukturelemente pro Rotorpaket vorgesehen sind, können diese n Strukturelemente beispielsweise in einem Winkelabstand von (360 / n) Grad angeordnet vorliegen.

Es ist im Sinne der Erfindung bevorzugt, dass die Rotorpakete so zueinander angeordnet vorliegen und den Elektromotor bilden, dass die Strukturelemente um einen Drehwinkel alpha versetzt zueinander vorliegen. Dadurch kann als besonderer Vorteil der Erfindung erreicht werden, dass die Außenhaut der Rotorpakte mit ihren Strukturelementen wie ein Ventilatorflügel wirkt und die Luft im Elektronikraum der Werkzeugmaschine verwirbelt und durchmischt. Mit anderen Worten sind die Strukturelemente auf der Außenseite des Elektromotors dazu eingerichtet, eine Verwirbelung bzw. Durchmischung der Luft im Elektronikraum der Werkzeugmaschine zu bewirken, so dass die Elektronik bzw. ihre Komponenten überraschend gut gekühlt werden können. Mit noch anderen Worten sind die Strukturelemente, die am Elektromotor der Werkzeugmaschine angeordnet vorliegen, dazu eingerichtet, die Luft im Elektronikraum der Werkzeugmaschine zu durchmischen bzw. zu verwirbeln, so dass etwaige Temperaturunterschiede innerhalb des Elektronikraums besonders wirksam abgebaut werden. Die Außenhaut der Rotorpakete kann vorzugsweise von einem Blechmaterial gebildet werden, wobei auf der Außenhaut der Rotorpakete die Strukturelemente angeordnet vorliegen können. Es ist im Sinne der Erfindung bevorzugt, dass die Außenhaut der Rotorpakete mit den Strukturelementen als "Blechgeometrie" bezeichnet wird.

Bei den Strukturelementen kann es sich um konkave und/oder konvexe Strukturen auf der Außenhaut des Elektromotors bzw. seiner Rotorpakete handeln. Konkave Strukturelemente können beispielsweise von Eindellungen, Tälern, Einkerbungen, Vertiefungen oder dergleichen in der Außenhaut der Rotorpakete gebildet werden, während konvexe Strukturelemente beispielsweise von Erhebungen, Wölbungen, Hügeln oder dergleichen auf der Außenhaut der Rotorpakete gebildet werden können.

Es ist im Sinne der Erfindung bevorzugt, dass die Rotorpakete so zueinander angeordnet vorliegen und den Elektromotor bilden, dass die Strukturelemente um einen Drehwinkel alpha versetzt zueinander vorliegen. Es hat sich gezeigt, dass gerade durch den Versatz der Rotorpakete zueinander um einen Drehwinkel alpha eine besonders gute Durchmischung der Luft im Elektronikraum der Werkzeugmaschine erreicht werden kann. Durch die versetzte Anordnung der Rotorpakete des Elektromotors zueinander liegen auch die Strukturelemente versetzt zueinander vor, so dass sie wie Schaufeln wirken und die Luft innerhalb der Werkzeugmaschine umwälzen.

Es ist im Sinne der Erfindung bevorzugt, dass der Drehwinkel in einem Bereich von 1 bis 15 Grad, bevorzugt in einem Bereich von 3 bis 10 Grad, besonders bevorzugt in einem Bereich von 4 bis 6 Grad und am meisten bevorzugt bei 5 Grad liegt. Es hast sich gezeigt, dass ein Drehwinkel von beispielsweise von circa 5 Grad eine besonders gute Ventilatorwirkung hat und eine besonders gute Durchmischung der Luft im Elektronikraum der Werkzeugmaschine bewirken kann.

Es ist im Sinne der Erfindung bevorzugt, dass die Werkzeugmaschine eine erste Öffnung zum Einsaugen von Luft und eine zweite Öffnung zum Austreten von Luft aufweist. Die erste Öffnung wird im Sinne der Erfindung bevorzugt als Eintrittsöffnung und die zweite Öffnung wird im Sinne der Erfindung bevorzugt als Austrittsöffnung bezeichnet. Vorzugsweise kann insbesondere der der Motorraum die erste Öffnung zum Einsaugen von Luft und die zweite Öffnung zum Austreten von Luft aufweisen. Es ist im Sinne der Erfindung bevorzugt, dass die erste Öffnung dazu eingerichtet ist, dass Luft in die Werkzeugmaschine eingesaugt wird. Der Unterdruck, mit dem das Einsaugen bewirkt wird, entsteht vorzugsweise durch die Rotationsbewegung des Rotors des Elektromotors. Die Luft wird insbesondere durch die Drehung des Rotors des Elektromotors in den Motorraum eingesaugt und in Bewegung gehalten. Mit anderen Worten kann der Elektromotor dazu eingerichtet sein, Luft in den Motorraum einzusaugen und in Bewegung zu halten, so dass eine Luftströmung entsteht. Die Luftströmung kann durch die Strukturelemente auf den Rotorpaketen verwirbelt werden, so dass eine Durchmischung der Luft im Elektronik- und Motorraum der Werkzeugmaschine bewirkt wird. Diese Durchmischung der Luft kann vorteilhafterweise zu einer besonders guten Kühlung der Elektronik der Werkzeugmaschine im Elektronikraum der Werkzeugmaschine führen.

Es ist im Sinne der Erfindung bevorzugt, dass die zweite Öffnung dazu eingerichtet ist, dass der Kühlluftstrom die Werkzeugmaschine verläßt. Es ist im Sinne der Erfindung ganz besonders bevorzugt, dass die Austrittsöffnung im Bereich des Lagerschilds auf der Antriebsseite des Elektromotors angeordnet vorliegt.

Es ist im Sinne der Erfindung bevorzugt, dass sich zwischen der ersten Öffnung und der zweiten Öffnung ein Luftstrom zur Kühlung der Elektronik der Werkzeugmaschine ausbildet. Mithin kann mit der Erfindung ein Kühlluftstrom zwischen der Eintrittsöffnung und der Austrittsöffnung des Motorraums erzeugt werden, so dass eine verbesserte Temperaturverteilung innerhalb der Werkzeugmaschine bzw. ihres Elektronikraums und darüber hinaus eine Kühlung der Elektronik ermöglicht werden kann.

Es hat sich gezeigt, dass insbesondere durch eine geeignete Geometrie der Außenhaut des Rotors des Elektromotors bzw. seiner Rotorpakete und durch die Vorsehung der ersten und der zweiten Öffnung eine besonders gute Durchmischung der Luft im Elektronikraum der Werkzeugmaschine erreicht werden kann. Außerdem kann sich in dem Elektronikraum ein Kühlluftstrom ausbilden, wobei durch die Durchmischung der Luft im Elektronikraum und die Ausbildung des Kühlluftstroms eine besonders starke und effektive Kühlung der Elektronik der Werkzeugmaschine und ihrer Komponenten ermöglicht werden kann. Dabei hat sich gezeigt, dass sich die Durchmischung der Luft im Elektronikraum und die Kühlwirkung des Luftstroms nicht einfach überlagern, wie es möglicherweise zu erwarten gewesen wäre. Stattdessen hat sich gezeigt, dass die Kombination der Durchmischung der Luft im Elektronikraum und des Kühlluftstroms eine überraschend wirksame Kühlung der Elektronik und ihrer Komponenten erreicht werden kann. Insbesondere können die Temperaturen der Elektronik und ihrer Komponenten und etwaige bestehende Temperaturunterschiede im Elektronikraum mit der Kombi-Kühlung aus Luft-Durchmischung und Kühlluftstrom besonders stark und nachhaltig verringert werden. Die Kombi-Kühlung aus Luft-Durchmischung und Kühlluftstrom wird im Sinne der Erfindung bevorzugt auch als "verbesserte Luftzirkulation innerhalb der Werkzeugmaschine" bezeichnet.

Es ist im Sinne der Erfindung bevorzugt, dass der Elektromotor ein Gehäuse umfasst, wobei die erste Öffnung in dem Gehäuse des Elektromotors angeordnet vorliegt. Es ist im Sinne der Erfindung bevorzugt, dass der Elektromotor ein Lagerschild umfasst, wobei die zweite Öffnung in dem Lagerschild des Elektromotors angeordnet vorliegt. Mit anderen Worten kann das Gehäuse des Elektromotors eine Eintrittsöffnung und das Lagerschild eine Austrittsöffnung für den Kühlluftstrom aufweisen. Das Lagerschild und das Gehäuse des Elektromotors bilden zusammen mit anderen Komponenten der Werkzeugmaschine Begrenzungen des Elektronikraums der Werkzeugmaschine, so dass die Eintrittsöffnung und die Austrittsöffnung dadurch Eintrittsöffnungen und der Austrittsöffnungen des Elektronikraums der Werkzeugmaschine darstellen.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: Ansicht einer bevorzugten Ausgestaltung der Werkzeugmaschine
- Fig. 2: Ansicht einer bevorzugten Ausgestaltung des Elektromotors
- Fig. 3: Ansicht einer bevorzugten Ausgestaltung des Elektronikraums

### Ausführungsbeispiele und Figurenbeschreibung:

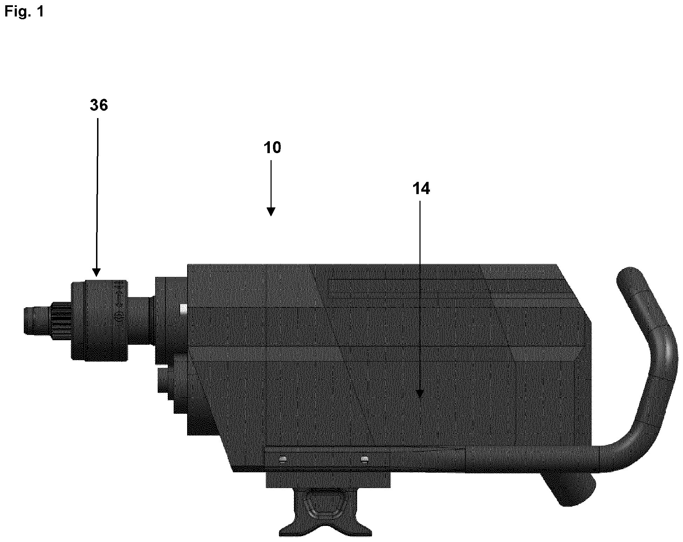

Figur 1 zeigt eine bevorzugte Ausgestaltung der Werkzeugmaschine 10. Dargestellt ist in Figur 1 insbesondere eine mögliche Lage des Elektromotors 14 innerhalb der Werkzeugmaschine 10. Die Werkzeugmaschine 10 kann eine Werkzeugaufnahme 36 aufweisen, an der ein Werkzeug (ohne Bezugszeichen) der Werkzeugmaschine 10 befestigt werden kann. Die Werkzeugmaschine 10 kann beispielsweise als Kernbohrgerät ausgebildet sein, wobei das Werkzeug der Werkzeugmaschine 10 von einer Bohrkrone gebildet werden kann. Ein Kernbohrgerät ohne Bohrkrone ist in Figur 1 exemplarisch dargestellt.

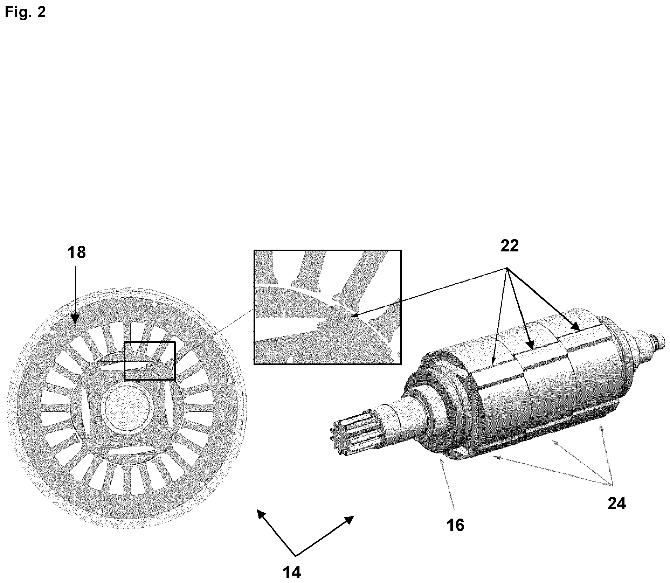

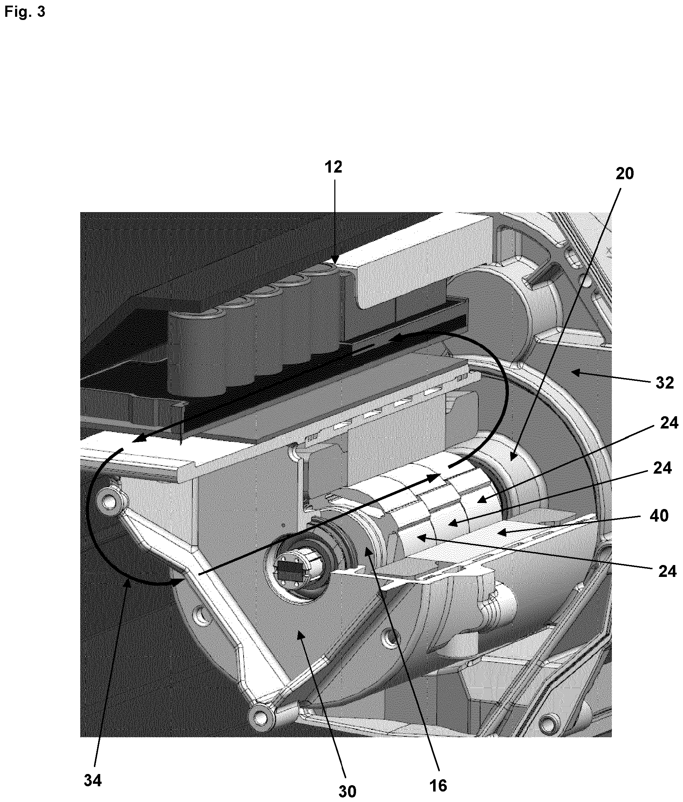

Figur 2 zeigt eine bevorzugte Ausgestaltung des Elektromotors 14 der Werkzeugmaschine 10. Der Elektromotor 14 weist einen Rotor 16 und einen Stator 18 auf, wobei sich der Rotor 16 in dem Stator 18 bewegen kann. In dem in Figur 2 abgebildeten Ausführungsbeispiel der Erfindung umfasst der Rotor 16 drei Rotorpakete 24, die jeweils ein Strukturelement 22 umfassen. Bei den in Figur 2 beispielhaft dargestellten Strukturelementen 22 handelt es sich um konvexe Strukturelemente 22, die sich aus einer Außenhaut der Rotorpakete 24 erheben. Die Strukturelemente 22 haben vorteilhafterweise eine Ventilatorwirkung, so dass die Luft in einem Elektronikraum 22 (siehe Figur 3) der Werkzeugmaschine 10 durchmischt werden kann. Dadurch kann die Elektronik 12 (siehe auch Figur 3) der Werkzeugmaschine 10 besonders gut gekühlt werden. Bei dem in Figur 2 dargestellten Ausführungsbeispiel des Elektromotors 14 der Werkzeugmaschine 10 weist der Elektromotor 14 drei Rotorpakete 24 auf, wobei jedes Rotorpaket 24 je ein Strukturelement 22 aufweist. Selbstverständlich kann der Elektromotor 14 der Werkzeugmaschine 10 auch mehr oder weniger als drei Rotorpakete 24 aufweisen. Es kann im Sinne der Erfindung bevorzugt sein, dass die Rotorpakete 24 je mehr als ein Strukturelement 22 aufweisen oder dass eine Anzahl der Strukturelemente 22 pro Rotorpaket 24 variiert. Beispielsweise können pro Rotorpaket 24 auch zwei, drei, vier oder mehr Strukturelemente 22 vorgesehen sein, die vorzugsweise im Wesentlichen gleichmäßig auf dem Elektromotor 14 bzw. auf seinem Gehäuse 30 verteilt vorliegen können.

Die Rotorpakete 24, die den Elektromotor 14 der Werkzeugmaschine 10 bilden, liegen vorzugsweise so zueinander angeordnet vor, dass die Rotorpakete 24 und/oder die Strukturelemente 22 um einen Drehwinkel alpha versetzt zueinander vorliegen. Es hat sich gezeigt, dass gerade durch den Versatz der Rotorpakete 24 zueinander um einen Drehwinkel alpha eine besonders gute Durchmischung der Luft im Elektronikraum 20 der Werkzeugmaschine 10 erreicht werden kann. Durch die versetzte Anordnung der Rotorpakete 24 des Elektromotors 14 zueinander liegen auch die Strukturelemente 22 versetzt zueinander vor, so dass sie wie Schaufeln wirken und die Luft innerhalb der Werkzeugmaschine 10 umwälzen.

Figur 3 zeigt eine bevorzugte Ausgestaltung des Elektronikraums 20 der Werkzeugmaschine 10. Zu sehen ist der Elektromotor 14, der in fluidischer Verbindung mit dem Elektronikraum 20 der Werkzeugmaschine 10 steht. Der Rotor 16 weist auf seiner Außenhaut Strukturelemente 22 auf, die dazu eingerichtet sind, die Luft im Elektronikraum 20 umzuwälzen. Außerdem wird in Figur 3 der Motorraum 40 der Werkzeugmaschine 10 gezeigt, wobei der Motorraum 40 von der direkten Umgebung des Elektromotors 14 der Werkzeugmaschine 10 gebildet wird. Der Motorraum 40 kann vorzugsweise von einem Gehäuse 30 des Elektromotors 14 umgeben sein.

In der Werkzeugmaschine 10 sind eine erste Öffnung 26 (nicht dargestellt) und eine zweite Öffnung 28 (nicht dargestellt) vorgesehen, die als Eintrittsöffnung 26 und Austrittsöffnung 28 für einen Kühlluftstrom 34 dienen. Der Kühlluftstrom 34 strömt durch den Elektronikraums 20 der Werkzeugmaschine 10 und ist dazu eingerichtet, die Elektronik 12 und ihre elektronischen Bauteile zu kühlen. Die erste Öffnung 26 ist in einem Gehäuse 30 des Motors 14 vorgesehen, während die zweite Öffnung 28 in einem Lagerschild 32 des Elektromotors 14 vorgesehen ist. Der Kühlluftstrom 34, der durch die Vorsehung der Öffnungen 26, 28 bewirkt wird, und die Durchmischung der Luft im Elektronikraum 20 der Werkzeugmaschine 10 sorgen vorteilhafterweise für eine Kombi-Kühlung der Elektronik 12 der Werkzeugmaschine 10, sowie für eine verbesserte Luftzirkulation innerhalb der Werkzeugmaschine 10.

### Bezugszeichenliste

- 10: Werkzeugmaschine
- 12: Elektronik
- 14: Elektromotor
- 16: Rotor
- 18: Stator
- 20: Elektronikraum
- 22: Strukturelemente
- 24: Rotorpakete
- 26: erste Öffnung, Eintrittsöffnung
- 28: zweite Öffnung, Austrittsöffnung
- 30: Gehäuse des Elektromotors
- 32: Lagerschild
- 34: Kühlluftstrom
- 36: Werkzeugaufnahme
- 40: Motorraum

## Patentansprüche

1. Werkzeugmaschine (10) mit einer Elektronik (12) und einem Elektromotor (14), wobei der Elektromotor (14) einen Rotor (16) und einen Stator (18) umfasst, wobei die Elektronik (12) in einem Elektronikraum (20) der Werkzeugmaschine (10) angeordnet ist,
**dadurch gekennzeichnet, dass**
der Elektronikraum (20) fluidisch mit einem den Elektromotor (14) umgebenden Motorraum (40) verbunden vorliegt und der Elektromotor (14) Strukturelemente (22) zur Durchmischung von Luft in dem Elektronikraum (20) und/oder dem Motorraum (40) der Werkzeugmaschine (10) aufweist.

2. Werkzeugmaschine (10) nach Anspruch 1
**dadurch gekennzeichnet, dass**
der Elektromotor (14) Rotorpakete (24) umfasst, wobei die Strukturelemente (22) auf den Rotorpaketen (24) des Elektromotors (14) angeordnet vorliegen.

3. Werkzeugmaschine (10) nach Anspruch 2
**dadurch gekennzeichnet, dass**
der Elektromotor (14) pro Rotorpaket (24) ein Strukturelement (22) aufweist.

4. Werkzeugmaschine (10) nach Anspruch 2 oder 3
**dadurch gekennzeichnet, dass**
die Rotorpakete (24) so zueinander angeordnet vorliegen und den Elektromotor (14) bilden, dass die Strukturelemente (22) um einen Drehwinkel alpha versetzt zueinander vorliegen.

5. Werkzeugmaschine (10) nach Anspruch 4
**dadurch gekennzeichnet, dass**
der Drehwinkel in einem Bereich von 1 bis 15 Grad, bevorzugt in einem Bereich von 3 bis 10 Grad, besonders bevorzugt in einem Bereich von 4 bis 6 Grad und am meisten bevorzugt bei 5 Grad liegt.

6. Werkzeugmaschine (10) nach einem der vorhergehenden Ansprüche
**dadurch gekennzeichnet, dass**
die Werkzeugmaschine (10) eine erste Öffnung (26) zum Einsaugen von Luft und eine zweite Öffnung (28) zum Austreten von Luft aufweist.

7. Werkzeugmaschine (10) nach Anspruch 6
**dadurch gekennzeichnet, dass**
der Elektromotor (14) ein Gehäuse (30) umfasst, wobei die erste Öffnung (26) in dem Gehäuse (30) des Elektromotors (14) angeordnet vorliegt.

8. Werkzeugmaschine (10) nach Anspruch 6 oder 7
**dadurch gekennzeichnet, dass**
der Elektromotor (14) ein Lagerschild (32) umfasst, wobei die zweite Öffnung (28) in dem Lagerschild (32) des Elektromotors (14) angeordnet vorliegt.

9. Werkzeugmaschine (10) nach einem der Ansprüche 6 bis 8
**dadurch gekennzeichnet, dass**
sich zwischen der ersten Öffnung (26) und der zweiten Öffnung (28) ein Luftstrom (34) zur Kühlung der Elektronik (12) der Werkzeugmaschine (10) ausbildet.
